# EUROPÄISCHE PATENTSCHRIFT

(11) **EP 2 184 510 B1**
(45) Veröffentlichungstag und Bekanntmachung des Hinweises auf die Patenterteilung: **16.01.2013**
(21) Anmeldenummer: 09173108.3
(22) Anmeldetag: 15.10.2009
(51) Int. Cl.: F16H 3/54, F16D 11/10

(54) **Schaltanordnung**
Shifting assembly
Agencement de commutation

(30) Priorität: 07.11.2008 DE 102008043562
(43) Veröffentlichungstag der Anmeldung: 12.05.2010
(73) Patentinhaber: ZF Friedrichshafen AG, 88038 Friedrichshafen (DE)
(72) Erfinder: Bader, Josef, 88045, Friedrichshafen (DE); Miller, Martin, 88090, Immenstaad (DE)

(56) Entgegenhaltungen:
- EP-A2- 0 132 023
- DE-A1- 19 733 519
- DE-A1-102005 021 698

## Beschreibung

Die vorliegende Erfindung betrifft eine in Planetenbauweise ausgeführte Bereichsgruppe eines Mehrgruppengetriebes mit einer klauengeschalteten Schaltanordnung gemäß dem Oberbegriff des Patentanspruchs 1, sowie ein Mehrgruppengetriebe mit einer Bereichsgruppe und einer derartigen Schaltanordnung, gemäß Patentanspruch 9.

In Schaltgetrieben wird zum Einschalten einer gewünschten Übersetzung häufig eine auf einer zentralen Welle gelagerte Schiebemuffe mit einer ersten Kupplungsverzahnung axial verschoben, um mit einem der gewünschten Übersetzung zugeordneten Kupplungskörper mit einer zweiten Kupplungsverzahnung drehfest verbunden zu werden. Um die beiden Kupplungsverzahnungen möglichst zügig und ruckfrei miteinander in Eingriff zu bringen, ist neben dem Synchronlauf zwischen der Schiebemuffe und dem Kupplungskörper, bzw. deren Kupplungsverzahnungen, auch eine konzentrische Ausrichtung der beiden Kupplungsverzahnungen notwendig.

Bei Schaltanordnungen mit mechanischen Synchronisiervorrichtungen können zwei miteinander zu kuppelnde Schaltelemente, beispielsweise eine Schiebemuffe und ein Kupplungskörper, mit Hilfe von Synchronringen während des Synchronisier- und Schaltvorganges konzentrisch zueinander ausgerichtet werden, so dass ein ruckfreies Einkuppeln möglich ist. Bei Schaltanordnungen ohne mechanische Synchronisiervorrichtung, die auch klauengeschaltete Schaltanordnungen genannt werden, ist eine derartige Ausrichtung nicht möglich.

Aus der DE 10 2005 021 698 A1 ist eine klauengeschaltete Schaltanordnung für eine in Planetenbauweise ausgeführte Nachschaltgruppe eines Mehrgruppengetriebes bekannt, bei der eine Schiebemuffe nicht auf einer zentralen Welle gelagert ist, sondern in einem Hohlradträger, der in eine am äußeren Umfang der Schiebemuffe angeordnete Außenverzahnung der Schiebemuffe eingreift. Dieses Getriebe weist keine mechanische Synchronisierung auf. Zur sicheren Führung der Schiebemuffe wird in der DE 10 2005 021 698 A1 vorgeschlagen, die Hohlradträgerverzahnung breit auszuführen. Dadurch steigt jedoch der Bauraumbedarf für diese Art der Schaltanordnung.

Eine schmale Hohlradträgerverzahnung kann dagegen nur eine weniger genaue Lagerung und Führung der Schiebemuffe sicherstellen. Dadurch entsteht das Problem, dass die Schlebemuffe beim Einlegen eines Ganges aus ihrer axialen Ausrichtung heraus kippt. Dabei wird die Kupplungsverzahnung der Schiebemuffe versetzt zu der Gegenverzahnung und ein problemloses Einkoppeln ist auch bei Synchronlauf der beiden Kupplungsverzahnungen nicht mehr möglich.

Es ist nun Aufgabe der vorliegenden Erfindung, eine Schaltanordnung für die Bereichsgruppe eines Mehrgruppengetriebes der beschriebenen Art zu schaffen, die wenig Bauraum benötigt und sicher und ruckfrei schaltbar ist. Des Weiteren soll ein Mehrgruppengetriebe mit einer derartigen Schaltanordnung geschaffen werden.

Gelöst wird diese Aufgabe durch eine Schaltanordnung mit den Merkmalen des Patentanspruchs 1 und durch ein Mehrgruppengetriebe mit einer solchen Schaltanordnung gemäß Patentanspruch 9. Vorteilhafte Weiterbildungen sind in den abhängigen Ansprüchen beschrieben.

Demnach wird eine in Planetenbauweise ausgeführte Bereichsgruppe eines Mehrgruppengetriebes mit einer klauengeschalteten Schaltanordnung vorgeschlagen, wobei das Sonnenrad mit der Antriebswelle, der Planetenträger mit der Abtriebswelle und das Hohlrad mit einer Schiebemuffe drehfest verbunden ist. Die Schiebemuffe ist dabei mit einer Aussenverzahnung versehen, die beim axialen Verschieben der Schiebemuffe in eine erste Richtung mit der Kupplungsverzahnung eines starr mit dem Planetenträger verbundenen Kupplungskörpers und durch axiales Verschieben in eine zweite Richtung mit der Kupplungsverzahnung eines gehäusefesten Kupplungskörpers drehfest verbindbar ist. Die Schiebemuffe kann durch ein am Innendurchmesser der Schiebemuffe angreifendes Schaltelement axial verschoben werden.

Erfindungsgemäß ist an der Schiebemuffe und/oder an mindestens einem der beiden Kupplungskörper zumindest ein Zentrierbund in axialer Verlängerung zu der jeweiligen Aussenverzahnung bzw. Kupplungsverzahnung angeordnet.

Der Zentrierbund sorgt dafür, dass die beiden miteinander zu koppelnde Aussenverzahnung und Kupplungsverzahnung während des Schaltvorganges an ihrem jeweiligen Endbereich, an dem sie aufeinander treffen, konzentrisch zueinander positioniert werden. Danach können die Aussenverzahnung und die Kupplungsverzahnungen ruckfrei miteinander in Eingriff gebracht werden, sobald Synchronlauf zwischen der Schiebemuffe und dem Kupplungskörper und eine"Zahn-auf-Lücke"-Stellung zwischen der Aussenverzahnung und der Kupplungsverzahnung erreicht ist.

Die erfindungsgemäße Anordnung benötigt durch das innerhalb der Schiebemuffe angeordnete und an deren Innenfläche angreifende Schaltelement zum Betätigen der Schiebemuffe weniger Bauraum in radialer Richtung als eine an ihrem Außenumfang betätigte Schiebemuffe. Dank des erfindungsgemäßen Zentrierbundes genügt auch eine verhältnismäßig schmale Lagerung der Schiebemuffe in axialer Richtung, weil die Schiebemuffe von der Lagerung nicht mehr exakt koaxial zur Mittelachse gehalten werden muss. Leichte Abweichungen in Form eines Kippens der Schaltmuffe aus ihrer koaxialen Lage zur Mittelachse werden während des Schaltvorganges durch den Zentrierbund korrigiert. Die erfindungsgemäße Schaltanordnung benötigt also insgesamt wenig Bauraum und ist trotzdem sicher und ruckfrei schaltbar.

Der Zentrierbund weist bevorzugt eine konische, koaxial zu der Mittelachse der dazugehörigen Aussenverzahnung angeordnete Zentrierfläche auf, wobei der größte Durchmesser der konischen Zentrierfläche gemäß einer besonders bevorzugten Ausführung dem Fußkreisdurchmesser der dazugehörigen Aussenverzahnung entspricht. Diese Ausführung des Zentrierbundes und der Zentrierfläche gewährleistet, dass die miteinander zu verbindende Aussenverzahnung und Kupplungsverzahnung nach dem Zentrieren durch den Zentrierbund stufenlos und ruckfrei ineinander geführt werden.

Die konische Zentrierfläche verläuft vorzugsweise in einem Winkel zwischen 5° und 15° zu der Mittelachse der Schiebemuffe bzw. der jeweiligen Kupplungsverzahnung. Eine am kleinsten Durchmesser der konischen Zentrierfläche anschließende Auflauffläche des Zentrierbundes verläuft gemäß einer weiteren bevorzugten Ausgestaltung der Schaltanordnung in einem Winkel von mehr als 15° zu der Mittelachse. Mit Hilfe dieser Auflauffläche wird das Einscheren des Zentrierbundes in die gegenüberliegende Kupplungsverzahnung erleichtert. Derselbe Effekt kann erreicht werden, indem am kleinsten Durchmesser des Zentrierbundes eine abgerundete Auflauffase vorgesehen wird.

Um den benötigten Bauraum so gering wie möglich zu halten, ist die Zentrierfläche des Zentrierbundes in axialer Richtung bevorzugt direkt an der dazugehörigen Aussenverzahnung bzw. Kupplungsverzahnung anliegend angeordnet.

Eine weitere bevorzugte Ausführung der Erfindung sieht vor, dass der Zentrierbund einstückig mit der Schiebemuffe bzw. mit dem jeweiligen Kupplungskörper ausgeführt ist. Auf diese Weise wird eine solide Verbindung zwischen den Bauteilen geschaffen. Zudem kann der Zentrierbund nach dieser Ausführung bei der Herstellung der Schiebemuffe bzw. der Kupplungskörper in einem Arbeitsschritt mit anderen Ausformungen der Bauteile gedreht und bearbeitet werden. Dabei kann bei einem rotationssymmetrischen Schaltelement, beispielsweise der Schiebemuffe, die korrekte Lage des Zentrierbundes zur Rotationsachse mit weniger Aufwand erreicht werden, weil der Zentrierbund beispielsweise in einer Aufspannung mit der Schiebemuffe bearbeitet werden kann.

Schließlich umfasst die vorliegende Erfindung ein Mehrgruppengetriebe, das eine oben beschriebene Schaltanordnung aufweist. Ein derartiges Fahrzeuggetriebe benötigt wegen der kompakten Bauweise der Schaltanordnung insgesamt weniger Bauraum und kann leichter gebaut werden.

Die Erfindung wird im Folgenden anhand der Figuren näher beschrieben. Dabei zeigen:
- Fig. 1: eine schematische Ansicht der Bereichsgruppe eines Mehrbereichsgetriebes mit einer erfindungsgemäßen Schaltanordnung zu Beginn eines Schaltvorganges aus der Neutralstellung in Richtung einer langsamen Übersetzung,
- Fig. 2: die schematische Schnittansicht der Bereichsgruppe im geschalteten Zustand,
- Fig. 3: einen vergrößert dargestellten Ausschnitt aus der Schiebemuffe mit dem Zentrierbund in einer ersten Ausführung,
- Fig. 4: den vergrößerten Ausschnitt aus der Schiebemuffe mit dem Zentrierbund in einer zweiten Ausführung und
- Fig. 5: die schematische Ansicht der Bereichsgruppe eines Mehrbereichsgetriebes mit einer anderen Ausführung der erfindungsgemäßen Schaltanordnung in Neutralstellung.

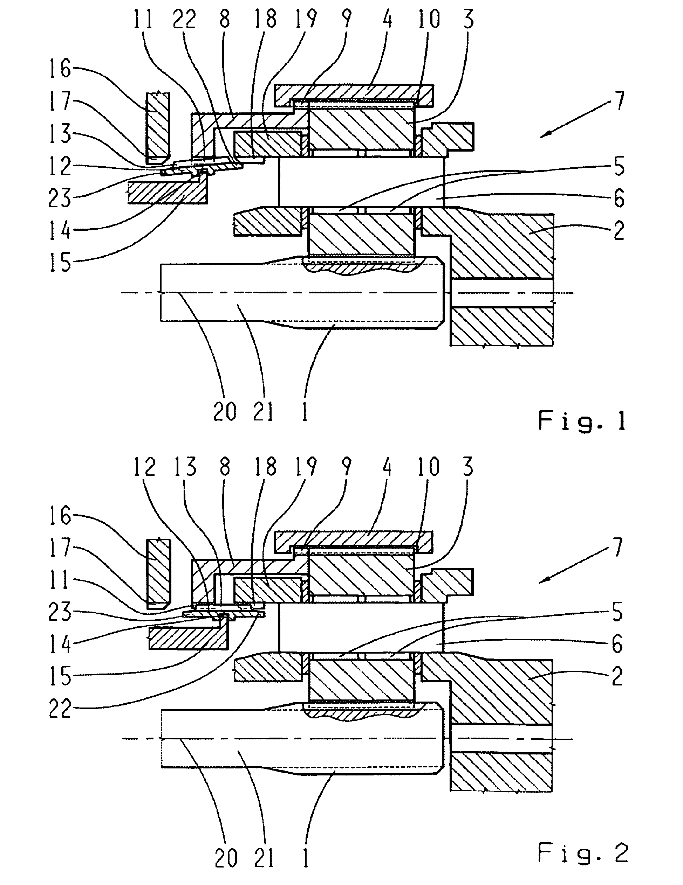

Die Bereichsgruppe des erfindungsgemäßen Mehrgruppengetriebes weist, wie in Fig. 1 dargestellt, einen Planetenradsatz 7 auf, der im Wesentlichen aus einem Sonnenrad 1, einem Planetenträger 2 mit Planetenrädern 3 und einem Hohlrad 4 besteht. Jedes Planetenrad 3 ist mittels Wälzlagern 5 drehbar auf einem Bolzen 6 in dem Planetenträger 2 gelagert. Die Bauteile des Planetenradsatzes 7 sind rotierbar um eine Mittelachse 20 angeordnet. Der Kraftfluss in der Bereichsgruppe verläuft von der Hauptgruppe kommend über die Antriebswelle 21, das Sonnenrad 1, die Planetenräder 3, den Planetenträger 2 zu einer nicht dargestellten Ausgangswelle, die starr mit dem Planetenträger 2 verbunden ist. Die Antriebswelle 21 kann beispielsweise die Ausgangswelle der Hauptgruppe des Mehrgruppengetriebes sein.

Eine Schiebemuffe 12 ist seitlich zu dem Planetenradsatz 7 angeordnet und über einen Hohlradträger 8 drehfest mit dem Hohlrad 4 verbunden. Der Hohlradträger 8 weist hohlradseitig eine Außenverzahnung 9 auf, die in die Innenverzahnung 10 des Hohlrades 4 eingreift. Eine Innenverzahnung 11 am anderen Ende des Hohlradträgers 8 greift in eine Außenverzahnung 13 der Schiebemuffe 12 ein.

Die Schiebemuffe 12 ist axial verschiebbar. Ein in axialer Richtung betätigbares Schaltelement 15 greift in eine Nut 14 am Innendurchmesser der Schiebemuffe 12 ein. Das Schaltelement 15 wird beispielsweise durch eine nicht dargestellte druckmittelbetätigte Zylinder-Kolben-Einheit oder durch einen elektrischen Antrieb betätigt.

Für die Schaltanordnung und die Schiebemuffe sind zumindest zwei Schaltstellungen möglich. Eine erste Schaltstellung, bei der die Eingangsdrehzahl der Antriebswelle 21 unverändert als Ausgangsdrehzahl auf den Planetenträger 2 übertragen wird und eine zweite Schaltstellung, bei der die Eingangsdrehzahl der Antriebswelle 21 auf eine geringere Ausgangsdrehzahl des Planetenträgers 2 übersetzt wird. Möglich ist auch eine dritte Schaltstellung, nämlich eine zwischen erster und zweiter Schaltstellung liegende Neutralstellung.

In Fig. 1 befindet sich die Schiebemuffe noch in der Neutralstellung. Die Schiebemuffe 12 wird aber bereits von dem Schaltelement 15 in Richtung erste Schaltstellung betätigt. Die Schiebemuffe 12 ist über ihre Außenverzahnung 13 in der Innenverzahnung 11 des Hohlradträgers 8 gelagert. Da die Schiebemuffe gegenüber dem Hohlradträger 8 in axialer Richtung jedoch möglichst leicht verschiebbar sein soll, ist diese Lagerung mit einem verhältnismäßig großen Spiel behaftet. An den Kontaktstellen zwischen dem Schaltelement 15 und der Schiebemuffe 12 ist ebenfalls Spiel vorgesehen, weil die rotierende Schiebemuffe 12 gegenüber dem in Rotationsrichtung feststehenden Schaltelement 15 möglichst reibungsfrei verdrehbar sein muss. Mangels spielfreier Lagerung neigt die Schiebemuffe 12 bei axialer Betätigung zum Kippen aus ihrer koaxialen Lage zur Mittelachse 20 heraus. Eine solche verkippte Stellung der Schiebemuffe 12 ist in Fig. 1 dargestellt. Der Kippwinkel der Schiebemuffe 12 ist in Fig. 1 vergrößert dargestellt, um die Kippstellung deutlich sichtbar zu machen. Eine solche Kippstellung führt bei herkömmlichen Schiebemuffen dazu, dass die Schiebemuffe während des axialen Verschiebens klemmt und dass der Schaltvorgang, wenn überhaupt, nur mit größerem Kraftaufwand und ruckartig möglich ist.

Um nun trotz der Kippneigung der Schiebemuffe 12 ein problemloses und ruckfreies Ineinanderschieben der Außenverzahnung 13 der Schiebemuffe und der Kupplungsverzahnung 18 an dem Kupplungskörper 19 zu gewährleisten, ist die Schiebemuffe 12 mit dem Zentrierbund 22 ausgestattet, der an der Schiebemuffe in axialer Verlängerung der Außenverzahnung 13 in Richtung des Kupplungskörpers 19 angeordnet ist. Der Zentrierbund 22 zentriert die Außenverzahnung 13 und die Kupplungsverzahnung 18 während des axialen Verschiebens der Schiebemuffe 12 zueinander und führt die beiden Verzahnungen exakt und stufenlos ineinander. Spätestens dann, wenn die erste Schaltstellung erreicht ist, berührt der Zentrierbund 22 die Kupplungsverzahnung 18 nicht mehr. Während des Betriebs in der ersten Schaltstellung wird das Drehmoment allein über die Außenverzahnung 13 auf die Kupplungsverzahnung 18 übertragen.

In der ersten Schaltstellung, die in Fig. 2 dargestellt ist, ist die Schiebemuffe 12 axial nach rechts verschoben und die Außenverzahnung 13 der Schiebemuffe 12 greift in eine Kupplungsverzahnung 18 eines starr mit dem Planetenträger 2 verbundenen ersten Kupplungskörpers 19 ein, Fig. 2 zeigt die gleichen Bauteile wie Fig. 1, deshalb sind gleiche Bauteile auch mit gleichen Bezugszeichen versehen und hier nicht nochmals beschrieben.

In der ersten Schaltstellung ist das Hohlrad 4 über den Hohlradträger 8, die Schiebemuffe 12 und den Kupplungskörper 19 drehfest mit dem Planetenträger 2 verbunden. Es liegt die beschriebene 1:1-Übersetzung zwischen Antriebswelle 21 und Planetenträger 2 vor.

In der zweiten, nicht dargestellten Schaltstellung ist die Schiebemuffe 12 axial nach links verschoben und die Außenverzahnung 13 der Schiebemuffe greift in eine Kupplungsverzahnung 17 eines gehäusefesten Kupplungskörpers 16 ein. In dieser zweiten Schaltstellung ist das Hohlrad 4 über den Hohlradträger 8, die Schiebemuffe 12 und den Kupplungskörper 16 drehfest mit dem Getriebegehäuse verbunden. Die Eingangsdrehzahl der Antriebswelle 21 wird durch den Planetenradsatz 7 auf eine niedrigere Ausgangsdrehzahl des Planetenträgers 2 übersetzt.

Zum Einschalten der zweiten Schaltstellung weist die Schiebemuffe 12 einen weiteren Zentrierbund 23 auf, der an der Schiebemuffe in axialer Verlängerung der Außenverzahnung 13 in Richtung des gehäusefesten Kupplungskörpers 16 angeordnet ist. Der Zentrierbund 23 zentriert die Außenverzahnung 13 und die Kupplungsverzahnung 17 zueinander während des axialen Verschiebens der Schiebemuffe 12 nach links. Über den Zentrierbund 23 gleitet die Schiebemuffe 12 so in den Kupplungskörper 16, dass die beiden Verzahnungen ruckfrei und ohne großen Kraftaufwand ineinander eingreifen können, sobald Drehzahlgleichheit und eine"Zahn-auf-Lücke"-Stellung erreicht sind. Spätestens dann, wenn die zweite Schaltstellung erreicht ist, berührt der Zentrierbund 23 die Kupplungsverzahnung 17 nicht mehr.

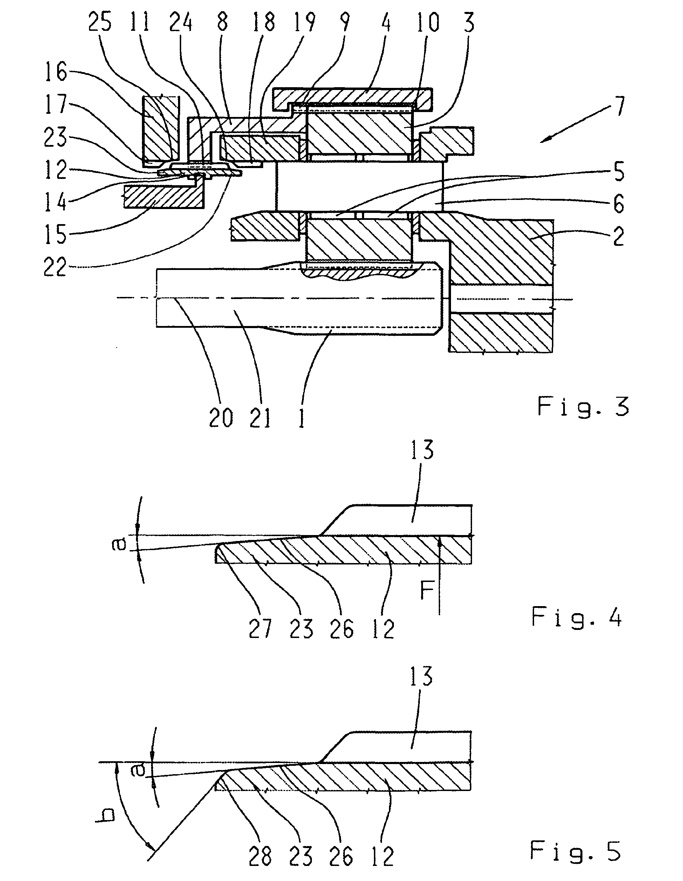

In Fig. 3 ist eine weitere Ausführung der erfindungsgemäßen Schaltanordnung in der Neutralstellung gezeigt. Diese Ausführung unterscheidet sich von den oben beschriebenen Ausführungen lediglich dadurch, dass zusätzlich zu den Zentrierbünden 22 und 23 an der Schiebemuffe 12 ein Zentrierbund 25 an dem Kupplungskörper 16 und ein Zentrierbund 24 an dem Kupplungskörper 19 angeordnet ist. Mit diesen zusätzlichen Zentrierbünden 24 und 25 wird der Schaltvorgang in die jeweilige Schaltstellung weiter verbessert und mögliche Abnutzungserscheinungen an den Kupplungsverzahnungen 17 und 18 durch die Zentrierbünde 22 und 23 können verringert werden.

Die vorliegende Erfindung umfasst auch Ausführungen, bei denen anstatt der Zentrierbünde 22 und 23 an der Schiebemuffe nur die Zentrierbünde 24 und 25 an den Kupplungskörpern vorgesehen sind. Ebenso sind Ausführungen denkbar, bei denen wechselweise je ein Zentrierbund an der Schlebemuffe und an einem Kupplungskörper vorgesehen sind, z. B. Zentrierbünde 23 mit 24 oder 25 mit 22.

Fig. 4 und Fig. 5 zeigen in einem vergrößert dargestellten Ausschnitt aus der Schiebemuffe jeweils besondere Ausformungen des Zentrierbundes 23. In entsprechend gespiegelter Ausführung sind diese besonderen Ausformungen des Zentrierbundes 23 ebenso an den Zentrierbünden 22, 24 und 25 anwendbar.

Der Zentrierbund 23 weist an seinem Außenumfang eine konische Zentrierfläche 26 auf. Der Neigungswinkel a der Zentrierfläche in Bezug auf die Rotationsachse der Schiebemuffe kann einen Wert zwischen 5 und 15 Grad aufweisen. In der Fig. 4 ist der Neigungswinkel a an der Außenverzahnung 13 der Schiebemuffe 12 angelegt, weil die Außenverzahnung 13 koaxial zur Rotationsachse der Schiebemuffe 12 verläuft. Der größte Durchmesser der konischen Zentrierfläche 26 entspricht dem Fußkreisdurchmesser F der Außenverzahnung 13 der Schiebemuffe 12, so dass ein stetiger, stufenloser Übergang zwischen der Zentrierfläche 26 und dem Fußkreis der Außenverzahnung 13 vorliegt, über den die Außenverzahnung 13 der Schiebemuffe 12 ruckfrei und gleichmäßig in die Kupplungsverzahnung 17 des gehäusefesten Kupplungskörpers 16 gleiten kann. Die Zentrierfläche 26 liegt direkt an der Außenverzahnung 13 an. Mit anderen Worten geht die Zentrierfläche 26 direkt in die Außenverzahnung 13 über, wodurch der Bauraum in axialer Richtung optimal ausgenutzt ist. An dem der Außenverzahnung 13 abgewandten Ende des Zentrierbundes 23 weist der Zentrierbund eine abgerundete Fase 27 auf.

Die in Fig. 5 gezeigte Ausführung des Zentrierbundes 23 unterscheidet sich von der Ausführung in Fig. 4 durch eine zusätzliche Auflauffläche 28. Die Auflauffläche 28 verläuft in einem Winkel b zur Mittelachse 21, der größer ist als 15 Grad. Die konische Auflauffläche 28 liegt mit ihrem größten Durchmesser direkt am kleinsten Durchmesser der ebenfalls konischen Zentrierfläche 26 an. Der Übergang von der Zentrierfläche 26 zu der Auflauffläche 28 ist vorteilhaft abgerundet.

### Bezugszeichen

- 1: Sonnenrad
- 2: Planetenträger
- 3: Planetenrad
- 4: Hohlrad
- 5: Wälzlager
- 6: Bolzen
- 7: Planetenradsatz
- 8: Hohlradträger
- 9: Außenverzahnung
- 10: Innenverzahnung
- 11: Innenverzahnung
- 12: Schiebemuffe
- 13: Außenverzahnung
- 14: Nut
- 15: Schaltelement
- 16: Kupplungskörper
- 17: Kupplungsverzahnung
- 18: Kupplungsverzahnung
- 19: Kupplungskörper
- 20: Mittelachse
- 21: Antriebswelle
- 22: Zentrierbund
- 23: Zentrierbund
- 24: Zentrierbund
- 25: Zentrierbund
- 26: Zentrierfläche
- 27: Fase
- 28: Auflauffläche

- a: Neigungswinkel
- b: Neigungswinkel
- F: Fußkreisdurchmesser

## Patentansprüche

1. In Planetenbauweise ausgeführte Bereichsgruppe eines Mehrgruppengetriebes mit einer Klauengeschalteten Schaltanordnung, wobei ein Sonnenrad (1) mit einer Antriebswelle (21), ein Planetenträger (2) mit einer Abtriebswelle und ein Hohlrad (4) mit einer Schiebemuffe (12) drehfest verbunden ist, wobei eine Außenverzahnung (13) der Schiebemuffe durch axiales Verschieben der Schiebemuffe (12) in eine erste Richtung mit der Kupplungsverzahnung (18) eines starr mit dem Planetenträger (2) verbundenen Kupplungskörpers (19) und durch axiales Verschieben in eine zweite Richtung mit der Kupplungsverzahnung (17) eines gehäusefesten Kupplungskörpers (16) drehfest verbindbar ist, und wobei die Schiebemuffe (12) durch ein an der Innenseite der Schiebemuffe angreifendes Schaltelement (15) axial verschiebbar ist, **dadurch gekennzeichnet, dass** die Schiebemuffe (12) und/oder mindestens einer der beiden Kupplungskörper (16, 19) zumindest einen Zentrierbund (22, 23, 24, 25) aufweist, der in axialer Verlängerung zu der jeweiligen Aussenverzahnung (13) bzw. Kupplungsverzahnung (17, 18) angeordnet ist.

2. Bereichsgruppe nach Anspruch 1, **dadurch gekennzeichnet, dass** der Zentrierbund (22, 23) der Schiebemuffe (12) eine konische, koaxial zu einer Mittelachse (20) der dazugehörigen Aussenverzahnung (13) angeordnete Zentrierfläche (26) aufweist.

3. Bereischsgruppe nach Anspruch 2, **dadurch gekennzeichnet, dass** der größte Durchmesser der konischen Zentrierfläche (26) der Schiebemuffe (12) dem Fußkreisdurchmesser F der dazugehörigen Aussenvorzahnung (13) entspricht.

4. Bereichsgruppe nach Anspruch 2 oder 3, **dadurch gekennzeichnet, dass** die konische Zentrierfläche (26) in einem Winkel zwischen 5° und 15°
zur Mittelachse (20) verläuft.

5. Bereichsgruppe nach Anspruch 4, **dadurch gekennzeichnet, dass** eine am kleinsten Durchmesser der konischen Zentrierfläche (26) anschließende Auflauffläche (28) des Zentrierbundes (22, 23) in einem Winkel von mehr als 15° zu der Mittelachse (20) verläuft.

6. Bereichsgruppe nach Anspruch 4 oder 5, **dadurch gekennzeichnet, dass** der Zentrierbund (22, 23) am kleinsten Durchmesser eine abgerundete Auflauffase (27) aufweist.

7. Bereichsgruppe nach einem der Ansprüche 2 bis 6, **dadurch gekennzeichnet, dass** die Zentrierfläche (26) des Zentrierbundes (22, 23) in axialer Richtung direkt an der dazugehörigen Aussenverzahnung (13) anliegt.

8. Bereichsgruppe nach einem der vorgenannten Ansprüche, **dadurch gekennzeichnet, dass** der Zentrierbund (22, 23, 24, 25) einstückig mit der Schiebemuffe (12) bzw. mit dem jeweiligen Kupplungskörper (16, 19) ausgeführt ist.

9. Mehrgruppengetriebe mit zumindest einer Hauptgruppe und einer Bereichsgruppe nach einem der vorgenannten Ansprüche.

## Claims

1. Range group of planetary design of a multi-group transmission with a claw-shifted shifting assembly, wherein a sun wheel (1) is connected in a rotationally conjoint manner to a drive shaft (21), a planetary carrier (2) to an output shaft and a hollow wheel (4) to a sliding sleeve (12), wherein an outer toothing (13) of the sliding sleeve can be connected in a rotationally conjoint manner by axial displacement of the sliding sleeve (12) in a first direction to the clutch toothing (18) of a clutch body (19) connected rigidly to the planetary carrier (2) and by axial displacement in a second direction to the clutch toothing (17) of a clutch body (16) fixed on the housing, and wherein the sliding sleeve (12) is axially displaceable by a shifting element (15) acting on the inside of the sliding sleeve, **characterized in that** the sliding sleeve (12) and/or at least one of the two clutch bodies (16, 19) has at least one centring collar (22, 23, 24, 25) which is arranged in an axial extension to the respective outer toothing (13) or clutch toothing (17, 18).

2. Range group according to Claim 1, **characterized in that** the centring collar (22, 23) of the sliding sleeve (12) has a conical centring surface (26) arranged coaxially with respect to a central axis (20) of the associated outer toothing (13).

3. Range group according to Claim 2, **characterized in that** the largest diameter of the conical centring surface (26) of the sliding sleeve (12) corresponds to the root diameter F of the associated outer toothing (13).

4. Range group according to Claim 2 or 3, **characterized in that** the conical centring surface (26) runs at an angle between 5° and 15° to the central axis (20).

5. Range group according to Claim 4, **characterized in that** a slope (28) of the centring collar (22, 23) which follows on from the smallest diameter of the conical centring surface (26) runs at an angle of more than 15° to the central axis (20).

6. Range group according to Claim 4 or 5, **characterized in that** the centring collar (22, 23) has a rounded ramp bevel (27) at the smallest diameter.

7. Range group according to one of Claims 2 to 6, **characterized in that** the centring surface (26) of the centring collar (22, 23) directly adjoins the associated outer toothing (13) in the axial direction.

8. Range group according to one of the previous claims, **characterized in that** the centring collar (22, 23, 24, 25) is embodied in one piece with the sliding sleeve (12) or with the respective clutch body (16, 19).

9. Multi-group transmission with at least one main group and a range group according to one of the previous claims.

## Revendications

1. Groupe-relais réalisé sous forme de construction planétaire pour une boîte de vitesses à groupes multiples, comprenant un agencement de commutation à renvoi en prise constante, une roue solaire (1) étant connectée de manière solidaire en rotation à un arbre d'entraînement (21), un porte-satellites (2) étant connecté de manière solidaire en rotation à un arbre de sortie et une couronne dentée (4) étant connectée de manière solidaire en rotation à un manchon coulissant (12), une denture extérieure (13) du manchon coulissant pouvant être connectée de manière solidaire en rotation par coulissement axial du manchon coulissant (12) dans une première direction à la denture d'accouplement (18) d'un corps d'accouplement (19) connecté rigidement au porte-satellites (2), et par coulissement axial dans une deuxième direction pouvant être connectée de manière solidaire en rotation à la denture d'accouplement (17) d'un corps d'accouplement (16) fixé au boîtier, et le manchon coulissant (12) pouvant être coulissé axialement par un élément de commutation (15) venant en prise sur le côté interne du manchon coulissant, **caractérisé en ce que** le manchon coulissant (12) et/ou au moins l'un des deux corps d'accouplement (16, 19) présentent au moins un épaulement de centrage (22, 23, 24, 25) qui est disposé dans le prolongement axial par rapport à la denture extérieure respective (13), ou denture d'accouplement (17, 18).

2. Groupe-relais selon la revendication 1, **caractérisé en ce que** l'épaulement de centrage (22, 23) du manchon coulissant (12) présente une surface de centrage (26) disposée coaxialement par rapport à un axe médian (20) de la denture extérieure associée (13).

3. Groupe-relais selon la revendication 2, **caractérisé en ce que** le diamètre maximal de la surface de centrage conique (26) du manchon coulissant (12) correspond au diamètre du cercle de base F de la denture extérieure associée (13).

4. Groupe-relais selon la revendication 2 ou 3, **caractérisé en ce que** la surface de centrage conique (26) s'étend suivant un angle compris entre 5° et 15° par rapport à l'axe médian (20).

5. Groupe-relais selon la revendication 4, **caractérisé en ce qu'**une surface de butée (28) de l'épaulement de centrage (22, 23) se raccordant au niveau du diamètre minimal de la surface de centrage conique (26) s'étend suivant un angle de plus de 15° par rapport à l'axe médian (20).

6. Groupe-relais selon la revendication 4 ou 5, **caractérisé en ce que** l'épaulement de centrage (22, 23) présente, au niveau du diamètre minimal, un biseau de butée arrondi (27).

7. Groupe-relais selon l'une quelconque des revendications 2 à 6, **caractérisé en ce que** la surface de centrage (26) de l'épaulement de centrage (22, 23) s'applique dans la direction axiale directement contre la denture extérieure (13) associée.

8. Groupe-relais selon l'une quelconque des revendications précédentes, **caractérisé en ce que** l'épaulement central (22, 23, 24, 25) est réalisé d'une seule pièce avec le manchon coulissant (12) ou avec le corps d'accouplement respectif (16, 19).

9. Boîte de vitesses à groupes multiples comprenant au moins un groupe principal et un groupe-relais selon l'une quelconque des revendications précédentes.
